Europäisches Patentamt

European Patent Office

Office européen des brevets

(19)

(11) Publication number: **O 003 632**
**B1**

# EUROPEAN PATENT SPECIFICATION

(12)

(45) Date of publication of patent specification: **14.07.82**

(21) Application number: **79200076.2**

(22) Date of filing: **12.02.79**

(51) Int. Cl.³: **D 06 N 1/00, C 08 L 95/00,
A 47 G 27/02 //E04F15/10**

(54) Carpet or carpet tiles and process for manufacture thereof.

(30) Priority: **13.02.78 AU 3362/78**

(43) Date of publication of application:
**22.08.79 Bulletin 79/17**

(45) Publication of the grant of the patent:
**14.07.82 Bulletin 82/28**

(84) Designated Contracting States:
**BE DE FR GB NL**

(56) References cited:
**FR - A - 1 120 301
US - A - 1 774 608
US - A - 2 949 378
US - A - 3 508 934**

(73) Proprietor: **HEUGA AUSTRALIA PTY. LIMITED
157 Walker Street
North Sydney NSW 2060 (AU)**

(72) Inventor: **Leupen, Willem Hendrik Leendert
C/- 6 Henry Street
Picton New South Wales 2571 (AU)**

(74) Representative: **Davidson, Cornelis Marinus
Reinder et al,
Octrooibureau Vriesendorp & Gaade B.P. 266
NL-2501 AW Den Haag (NL)**

Courier Press, Leamington Spa, England.

## Carpet or carpet tiles and process for manufacture thereof

The present invention relates to carpet or carpet tiles and a process of manufacture thereof.

At present carpet and carpet tiles, which comprise a carpet layer, a primary backing, a bitumen based backing and a secondary backing, are manufactured with a pure bitumen backing i.e. by applying two coatings of bitumen, e.g. a 110/20 bitumen, to the underside of a carpet to form a backing, pressing a secondary backing sheet onto the bitumen coating and, where desired, cutting the backed carpet into the desired size tiles.

The bitumen backing, while satisfactory for holding the carpet or carpet tile together and having the right physical properties to make the carpet or carpet tile durable, it is unsatisfactory from a flammability standpoint.

The invention provides carpet or carpet tiles which do not show the flammability problem, are cheaper to produce than the present carpet or carpet tiles with bitumen backing, while no problems arise with the brittleness of the bitumen backing.

This result is obtained by the application of a layer of a backing composition which comprises an admixture with bitumen of the limestone-type filler with particles all of which are less than 1 mm, 10% to 50% by weight of which are between 1 mm and 77 $\mu$m, and 90% to 50% by weight of which are less than 77 $\mu$m, the combination of filler and bitumen having a ball and ring softening point of 373 K (100°C) to 403 K (130°C) and a penetration of 5 to 25 points. The softening point is determined according to British Standard B.S. 4692:1971, and the penetration according to British Standard B.S. 4691:1971.

The choice of such a limestone-type filler in the bitumen provides the desired fire resistancy; the particle-size distribution gives the necessary flexibility.

It is observed that U.S. patent 3,508,934 describes fire resistant bituminuous compositions comprising bitumen wherein various inorganic materials (i.e. dolomite, limestone dust) in a particle size smaller than 75 $\mu$m have been incorporated, said composition having a softening point of about 380 K (107°C).

However, these compositions further comprise so-called "phosphate rock" in a granulometric range of 700—45 $\mu$m which phosphate rock is necessary for fire-resistant properties and they are especially intended and used for the preparation of walls and/or roofs (shingles). For this different purpose the filled bitumen (with a completely different composition because of the necessary presence of phosphate rock) is combined with a felt, the felt being filled or saturated as completely as possible with the bitumen.

For a carpet or carpet tile backing these bitumen compositions are neither intended nor suitable.

In this specification and claims, by a limestone-type filler is means a non-flammable mineral filler having a particle size distribution as described above and is preferably a carbonate-type mineral such as limestone or dolomite. Choice of the filler will depend on locally available material and price considerations.

The amount of limestone-type filler in the bitumen can vary within wide ranges. However, it is preferred that the limestone-type filler can be incorporated in the backing composition of the present invention in an amount of between 10% and 90% by weight based on the weight of the backing composition. Within this range an optimum effect is obtained.

In a preferred embodiment of the invention the backing composition further comprises alumina trihydrate in an amount of up to 10% by weight based on the total weight of the backing composition. On the application of heat the alumina trihydrate releases its water of crystallization and acts as a fire-retardant, thus improving the flammability properties of the carpet or carpet tiles.

It is observed that it is well known per se (see Kittel: Lehrbuch der Lacke und Beschichtungen (Berlin 1976), Band III, page 378 line 20 and related bibliography reference 511) to use aluminium hydroxide (i.e. alumina trihydrate) as fire resistant additive in paints and coatings.

However, there is no relation between paints and coatings as meant by Kittel and the bitumen-based backing compositions which are used according to the invention and that a small amount of alumina trihydrate admixed with a limestone-type filler would give a favourable result in the final carpet or carpet tile, without adversely influencing the properties of the backing composition could not be foreseen.

The method of manufacture of the carpet or carpet tiles according to the invention comprises:

admixing a bitumen and a limestone-type filler which comprises particles all of which are less than 1 mm and 10% to 50% by weight of which are between 1 mm and 77 $\mu$m, and 90 to 50% by weight of which are less than 77 $\mu$m, to form a filled bitumen having a ball and ring softening point of 373 K (100°C) to 403 K (130°C) and a penetration of 5 to 25 points, applying a layer of said filled bitumen (7) while fluid to one surface of a secondary backing sheet (1) which is conventional in the art and the underside of a carpet (9) is pressed to said layer.

The following examples will illustrate preferred embodiments of the invention and should not be construed as limiting thereon.

Example 1

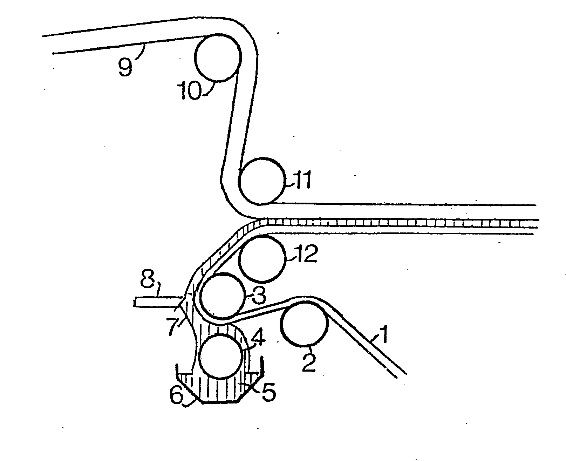

The accompanying drawing shows a schematic diagram of a method of manufacturing carpet tiles according to an embodiment of the invention. In the drawing a secondary backing strip of non-woven polypropylene 1 is passed by means of rollers 2 and 3 over a roller 4 which picks up a mixture 5 to 45/60 bitumen and limestone having a sieve analysis (determined according to British Standard B.S. 410:1962) 100%—16 mesh, 85%—200 mesh and 65%—300 mesh at a temperature of from 433 K (160°C) to 463 K (190°) from a trough 6 thereby forming a backing 7 of filled bitumen. The thickness of the layer 7 is controlled by roller 3 and heated bar 8. Carpet 9 is brought to the coated polypropylene by roller 10 and the carpet tile material is formed by pressing between rollers 11 and 12. Thereafter the carpet tile material is cut to size and shape.

Example 2

To illustrate the improved flammability properties of the carpet tiles manufactured according to the invention, three tiles were subjected to the tests for early fire hazard properties of material of Australian Standard 1530 Part 3—1976. Tile A was a green carpet tile having a pile composition 80% wool 20% nylon, a pile weight of 1355 g.m$^{-2}$, total weight of 4440 g.m$^{-2}$, and a backing comprising 25% bitumen 10% alumina hydrate and 65% limestone. Tile B was a carpet tile having a pile composition 80% wool 20% nylon, a pile weight of 1355 m.g$^{-2}$, a total weight of 4440 g.m$^{-2}$ and a backing composition comprising 25% bitumen and 75% limestone. Tile C was a carpet tile having pile composition of 80% wool 20% nylon, a pile weight of 1200 g.m$^{-2}$, a pile height of 6 mm, a primary backing of woven polypropylene, a backing of bitumen, a secondary backing of polypropylene and a total weight of 4000 g.m$^{-2}$. Results of the tests are summarised in Table 1 which follows.

TABLE 1

| Tile | Ignitability index (0—20) | Spread of flame index (0—10) | Heat evolved index (0—10) | Smoke developed index (0—10) |
|---|---|---|---|---|
| A | 16 | 6 | 4 | 4 |
| B | 16 | 5 | 3 | 4 |
| C | 14 | 7 | 5 | 7 |

The above table shows the superiority of the carpet tiles having a filled bitumen backing.

## Claims

1. A carpet or carpet tile comprising a carpet, a secondary backing sheet and a layer of a backing composition which comprises an admixture with bitumen of a limestone-type filler comprising particles all of which are less than 1 mm, 10% to 50% by weight of which are between 1 mm and 77 $\mu$ and 90% to 50% of which are less than 77 $\mu$, the combination of filler and bitumen having a ball and ring softening point of 373 K to 403K and a penetration of 5 to 25 points.

2. A carpet or carpet tile according to claim 1 wherein said filler is present in an amount of between 10% and 90% by weight based on the total weight of said backing composition.

3. A carpet or carpet tile according to claim 1 or 2 the backing composition further comprising alumina trihydrate in an amount of up to 10% by weight based on the total weight of said backing composition.

4. In a process for manufacturing carpet or carpet tiles, the improvement comprising admixing a bitumen and a limestone-type filler which comprises particles all of which are less than 1 mm, 10% to 50% by weight of which are between 1 mm and 77 $\mu$m and 90% to 50% by weight of which are less than 77 $\mu$m to form a filled bitumen having a ball and ring softening point of 373 K to 403 K and a penetration of 5 to 25 points, applying a layer of said filled bitumen (7) while fluid to one surface of a secondary backing sheet (1) which is conventional in the art, and pressing the underside of a carpet (9) to said layer.

5. The process according to claim 4 further comprising admixing up to 10% by weight based on the weight of said filled bitumen of alumina tri-hydrate with said filler.

## Revendications

1. Moquette ou dalle de moquette comprenant une moquette, une feuille de base secondaire et une couche d'une composition de base qui comprend un mélange avec du bitume d'une charge de type calcaire constituée de particules mesurant toutes moins de 1 mm, dont 10 à 50% en poids mesurent entre 1 mm et 77 $\mu$m et 90 à 50% en poids mesurent moins de 77 $\mu$m, la combinaison de la charge et du bitume ayant un point de remollissement bille et anneau de 373 K à 403 K et une pénétration de 5 à 25 points.

2. Moquette ou dalle de moquette selon la revendication 1, dans laquelle ladite charge est présente en une quantité comprise entre 10% et 90% en poids par rapport au poids total de ladite composition de base.

3. Moquette ou dalle de moquette selon l'une des revendications 1 ou 2, la composition pour base comprenant de plus de l'alumine trihydratée en une quantité d'au plus 10% en poids par rapport au poids total de ladite composition pour base.

4. Dans un procédé de fabrication de moquette ou de dalles de moquette, le perfectionnement comportant le mélange d'un bitume et d'une charge de type calcaire constituée de particules mesurant toutes moins de 1 mm, dont 10 à 50% en poids mesurent entre 1 mm et 77 $\mu$m et 90 à 50% en poids mesurent moins de 77 $\mu$m pour former un bitume chargé ayant un point de remollissement bille et anneau de 373 K à 403 K et une pénétration de 5 à 25 points, l'application d'une couche dudit bitume chargé (7) alors qu'il est fluide à une surface d'une feuille de base secondaire (1) qui est classique dans l'art et le pressage de l'envers d'une moquette (9) contre ladite couche.

5. Procédé selon la revendication 4, caractérisé en ce qu'il comprend de plus le mélange á ladite charge d'une quantité d'alumine trihydratée d'au plus 10% en poids par rapport au poids dudit bitume chargé.

**Patentansprüche**

1. Teppich oder Teppichfliese, umfassend einen Teppich, eine sekondäre Rückenschicht und eine Schicht einer Rückenzusammensetzung, die gemischt mit Bitumen einen kalksteinartigen Füllstoff enthält, der Teilchen aufweist, die alle kleiner als 1 mm sind, wobei 10 Gew.% bis 50 Gew. % davon zwischen 1 mm und 77 $\mu$ sind und 90 Gew.% bis 50 Gew.% davon kleiner als 77 $\mu$ sind, wobei die Kombination von Füllstoff und Bitumen einen Kugel- und Ringerweichungspunkt von 373 K bis 403 K und eine Penetration von 5 bis 25 Punkten hat.

2. Teppich oder Teppichfliese nach dem Anspruch 1, worin der genannte Füllstoff in einer Menge zwischen 10 Gew. % und 90 Gew.%, bezogen auf das Gesamtgewicht oder Rückenzusammensetzung anwesend ist.

3. Teppich oder Teppichfliese nach den Ansprüchen 1 oder 2, worin der genannte Rückenzusammensetzung weiter Aluminatrihydrat in einer Menge bis 10 Gew.%, bezogen auf das Gesamtgewicht der genannten Rückenzusammensetzung, enthält.

4. Verfahren zur Herstellung von Teppichen oder Teppichfliesen, dadurch gekennzeichnet, dass ein Bitumen und ein kalksteinartiger Füllstoff mit Teilchen die alle kleiner als 1 mm sind, wobei 10 Gew.% bis 50 Gew.% davon zwischen 1 mm und 77 $\mu$ sind und 90 Gew.% bis 50 Gew.% davon kleiner als 77 $\mu$ sind, vermischt werden wobei ein gefülltes Bitumen gebildet wird mit einem Kugel- und Ringerweichungspunkt von 373 K bis 403 K und eine Penetration von 5 bis 25 Punkten, eine Schicht des genannten gefüllten Bitumens (7) in flüssigem Zustand, auf eine Oberfläche einer sekondären Rückenschicht (1), die auf diesem Gebiet üblich ist aufgetragen wird, und die Unterseite eines Teppich (9) auf die genannte Schicht gedrückt wird.

5. Verfahren nach dem Anspruch 4, das weiter umfasst, dass bis 10 Gew.% Aluminatrihydrat auf das Gewicht des genannten gefüllten Bitumens bezogen, mit dem genannten Füllstoff vermischt wird.